# EUROPÄISCHE PATENTANMELDUNG

(11) **EP 4 604 340 A2**
(43) Veröffentlichungstag der Anmeldung: **20.08.2025**
(21) Anmeldenummer: 25181357.2
(22) Anmeldetag: 23.04.2020
(51) Int. Cl.: H02G 11/00

(54) **EINRICHTUNG ZUR LANDSTROMVERSORGUNG EINES SCHIFFES**

(30) Priorität: 26.04.2019 DE 202019102347 U
(62) Teilanmeldung aus: 20721206.9
(71) Anmelder: Igus GmbH, 51147 Köln (DE)
(72) Erfinder: McCaskill, Sean, Charlotte, 28226 (US); Duff, Robb, 53809 Ruppichteroth (DE); Tiling, Martin, 50823 Köln (DE)
(74) Vertreter: Lippert Stachow Patentanwälte Rechtsanwälte

(57) **Zusammenfassung**

Einrichtung (1) zur Versorgung eines Verbrauchers, dessen Position zunächst nicht genau bestimmbar, aber später im Wesentlichen stationär an einem Hafenkai festlegbar ist, mit elektrischer Energie von einem ortsfesten Versorger, mit einem verfahrbaren Wagen oder Schlitten (2), der einen zwischen einer ersten Position (7) und einer zweiten Position (8) beweglichen Arm (3) umfasst, der mindestens ein Steckverbinderteil (4) zur Verbindung mit einer ersten Energieversorgungsleitung (5) des Schiffes aufweist, wobei das Steckverbinderteil (4) über eine zweite Energieversorgungsleitung (6) mit dem Versorger verbindbar ist und der Arm (3) zwischen der ersten Position (7) und der zweiten Position (8) verschwenkbar am verfahrbaren Wagen oder Schlitten (2) angeordnet ist und der verfahrbare Wagen oder Schlitten (2) an einer am Hafenkai anbringbaren Führungseinrichtung geführt ist.

## Beschreibung

Die Erfindung betrifft allgemein eine Einrichtung zur Versorgung eines Verbrauchers, dessen Position zunächst nicht genau bestimmbar, aber später im Wesentlichen stationär festlegbar ist, mit Energie von einem ortsfesten Versorger, mit einem verfahrbaren Wagen oder Schlitten, der mit einem zwischen einer ersten Position und einer zweiten Position beweglichen Arm verbunden ist, der mindestens ein Steckerteil zur Verbindung mit einer Energieversorgungsleitung des Verbrauchers aufweist, wobei das Steckerteil über eine Energieversorgungsleitung mit dem Versorger verbunden ist.

Die Erfindung betrifft insbesondere eine Einrichtung zur Versorgung eines Schiffes mit Energie aus einem landseitigen Energieversorgungsnetz.

Eine derartige Einrichtung ist aus der WO 2012/116919 A1 bekannt. Bei dieser Einrichtung handelt es sich um eine Energieversorgungseinrichtung für ein an einem Schiffsanlegeplatz eines Hafens liegendes Schiff. Die Führungseinrichtung weist einen an Land angeordneten horizontal verfahrbaren Schlitten auf, an den eine mit einem Steckerteil versehene Energieversorgungsleitung zur Versorgung des Schiffes mit elektrischer Energie angeordnet ist. Dabei ist die Energieversorgungsleitung elektrisch mit einem landseitigen Energieversorgungsnetz verbindbar. An dem Schlitten ist ein steckerseitiger Abschnitt der Energieversorgungsleitung über einen Arm vertikal verschiebbar angeordnet.

Mit dem horizontal verfahrbaren Wagen oder Schlitten kann der mit den Steckerteil versehene Abschnitt der Energieversorgungsleitung **z.B.** entlang des Schiffsanlegeplatzes und auch entlang eines an dem Schiffsanlegeplatz liegenden Schiffes variabel angeordnet werden. Dadurch kann der mit dem Steckerteil versehene Abschnitt der Energieversorgungsleitung zu der Stelle des Schiffsanlegeplatzes verfahren werden, an der er für das jeweils dort liegende Schiff benötigt wird. Dies ist insbesondere deshalb vorteilhaft, weil an einem Schiffsanlegeplatz eines Hafens die unterschiedlichsten Schiffe anlegen können, die sich z.B. durch ihre Größe und Bauart unterscheiden. Bei jedem dieser Schiffe kann die mit dem Steckerteil versehene, vom Verbraucher her führende Energieversorgungsleitung an einer anderen Stelle entlang des Schiffsanlegeplatzes benötigt werden. Durch den auf einer geeigneten Führungseinrichtung, die auch den versorgerseitigen Abschnitt der Energieversorgungsleitung aufnehmen kann, verfahrbaren Schlitten wird vermieden, dass der versorgerseitige Abschnitt der Energieversorgungsleitung über weite Strecken lose und ungeschützt auf oder an dem Schiffsanlegeplatz liegt.

Die Verbindung des an die Energieversorgungsleitung des Versorgers angeschlossenen Steckerteils mit der Energieversorgungsleitung des Verbrauchers birgt aufgrund der angelegten hohen Spannung die Gefahr einer Lichtbogenzündung und einer dadurch bewirkten Explosion, durch die heiße Gase in einen von Personen genutzten und/oder entzündliche Gegenstände enthaltenden Raum ausströmen können. Insbesondere kann eine solche Lichtbogenexplosion sich auf einer Kaianlage eines Schiffsanlegeplatzes aufhaltende Personen und entzündliche Gegenstände, wie Fahrzeuge, gefährden.

Es besteht daher ein Bedürfnis, eine Einrichtung zur Versorgung eines Verbrauchers der oben genannten Art bereitzustellen, die einen für Personen und entzündliche Gegenstände gefährdeten Raum vor den Auswirkungen einer möglichen Lichtbogenzündung zwischen dem Steckerteil der versorgerseitigen Energieversorgungsleitung und der mit dem Steckerteil verbundenen verbraucherseitigen Energieversorgungsleitung weitgehend schützt.

Eine weitere Einrichtung zur Versorgung eines Schiffes mit Energie aus einem landseitigen Energieversorgungsnetz bzw. zum Landstromanschluss ist aus der DE 10 2015 117 187 A1 bekannt. Hier wird eine gesonderte Stützkonstruktion vorgeschlagen, an welcher ein verfahrbarer Wagen bzw. Schlitten mit Steckverbinder für eine Versorgungsleitung eines Schiffes vorgesehen ist. Der Wagen wird versorgt über eine Energieführungskette, die in der gesonderten Stützkonstruktion geführt ist. Diese Einrichtung erfordert im Vergleich zur Einrichtung aus WO 2012/116919 A1 bereits deutlich weniger Baumaßnahmen am Hafenkai, die Bedienerfreundlichkeit ist jedoch verbesserungswürdigt.

Allgemein besteht - insbesondere bei der Landstromversorgung von Schiffen - also ein Bedürfnis, die Bedienung zu erleichtern und gleichzeitig Risiken bzw. Gefahren für das Bedienpersonal zu reduzieren. Eine erste technische Aufgabe der Erfindung besteht somit darin, eine Verbesserung hinsichtlich Bedienung und Sicherheit zu ermöglichen. Dabei soll der bauliche Aufwand am Hafenkai möglichst gering bleiben.

Diese Aufgabe wird gemäß einem ersten unabhängigen Aspekt gelöst durch eine Einrichtung mit den Merkmalen nach Anspruch 1.

Diese Aufgabe wird gemäß einem zweiten unabhängigen Aspekt gelöst durch eine Einrichtung mit den Merkmalen nach Anspruch 2.

Vorteilhafte Weiterbildungen ergeben sich aus den jeweiligen Unteransprüchen.

In vorteilhafter Weiterbildung ist an dem mit dem verfahrbaren Wagen oder Schlitten verbundenen, bewegbaren Arm ein bewegbares Abdeckteil angeordnet, das in der ersten Position des Arms das Steckerteil zumindest teilweise abdeckt und in der zweiten Position des Arms das Steckerteil zur Verbindung mit der verbraucherseitigen Energieversorgungsleitung freilegt. Das Abdeckteil kann mit dem Arm bzw. mit dessen Bewegung bewegbar sein.

Durch das Abdeckteil kann ein gefährdeter Raumbereich, z.B. auf einer Kaianlage eines Schiffsanlegeplatzes, gegen eine mögliche Lichtbogenzündung der Verbindungsstelle zwischen dem Steckerteil und der verbraucherseitigen Energieversorgungsleitung abgeschirmt werden.

Das Steckerteil dient zur Verbindung zwischen der versorgerseitigen Energieversorgungsleitung der Einrichtung und der verbraucherseitigen Energieversorgungsleitung, die z.B. vom Schiff mitgeführt wird. Das Steckerteil ist somit allgemein als Steckverbinderteil zu verstehen (Buchse oder Stecker).

In der ersten Position des Arms kann der Arm sich in einer Bereitstellungsposition befinden, in der das Steckerteil nicht mit einer verbraucherseitigen Energieversorgungsleitung verbunden ist. Der Wagen oder Schlitten kann mit dieser Position des Arms an die Stelle verfahren werden, an der sich der Verbraucher befindet und die verbraucherseitige Energieversorgungsleitung der Einrichtung zur Versorgung des Verbrauchers zugeführt werden kann. Aus dieser ersten Position kann der mit dem Wagen oder Schlitten verbundene Arm in seine zweite Position bewegt werden, in der das Abdeckteil das Steckerteil freilegt, woraufhin die verbraucherseitige Energieversorgungsleitung mit dem Steckerteil verbunden werden kann. Nach Verbindung der verbraucherseitigen Energieversorgungsleitung mit dem Steckerteil kann der Arm mit der verbraucherseitigen Energieversorgungsleitung aus seiner zweiten Position in die erste Position bewegt werden, in der das Abdeckteil das Steckerteil zumindest teilweise abdeckt. In dieser befindet sich der Arm dann in seiner Betriebsposition, in der der Verbraucher vom ortsfesten Versorger mit Energie versorgt werden kann.

Das Abdeckteil kann am Arm in dessen erster Position so angeordnet sein, dass es das Steckerteil in der vom Verbraucher weg weisenden Richtung und bevorzugt auch in den beiden Richtungen des Verfahrweges des Wagens oder Schlittens abdeckt.

In seiner zweiten Position ist der Arm vorzugsweise so angeordnet, dass das Steckerteil für eine sich auf einer ortsfesten Basisfläche, relativ zu der der Wagen oder Schlitten verfahrbar ist, befindliche Bedienperson leicht zugänglich ist, sodass sie insbesondere eine ein größeres Gewicht und eine größere Dicke aufweisende verbraucherseitige Energieversorgungsleitung auf einfache Weise mit dem Steckerteil verbinden kann.

Das Abdeckteil kann eine vom Verbraucher weg gerichtete Wand aufweisen, mit der es das Steckerteil in der ersten Position des Arms abdeckt. Weiterhin kann das Abdeckteil an seine vom Verbraucher weg weisende Wand anschließende, in Richtung des Verfahrweges des Wagens oder Schlittens weisende Seitenwände aufweisen, die zusammen mit der vom Verbraucher weg weisenden Wand das Steckerteil in der ersten Position des Arms abdecken.

Das Abdeckteil kann in der ersten Position des Arms an diesem verriegelbar sein.

Die Bewegung des Abdeckteils kann an die Bewegung des Arms zwischen seiner ersten und zweiten Position gekoppelt sein, insbesondere durch eine mechanische Kopplung zwischen dem Abdeckteil und dem Arm.

In einer bevorzugten Ausführung der Erfindung ist der Arm zwischen seiner ersten Position und seiner zweiten Position verschwenkbar, wobei die Schwenkachse horizontal und parallel zum Verfahrweg des Wagens oder Schlittens angeordnet sein kann.

Der Wagen oder Schlitten kann in einem Schacht in der ortsfesten Basisfläche, z.B. eines Kais, angeordnet sein, sodass der mit dem Wagen oder Schlitten verbundene Arm in seiner zweiten Position zwecks einfacher Erreichbarkeit des Steckerteils durch eine Bedienperson im Wesentlichen horizontal, zumindest aber in einem Winkel von kleiner als 30°, insbesondere kleiner als 20°, gegenüber der Horizontalen angeordnet sein kann.

Handelt es sich um eine Energieversorgungseinrichtung für ein an einem Schiffsanlegeplatz eines Hafens liegendes Schiff, ist der Wagen oder Schlitten vorzugsweise in einer schiffsseitig an der Kaimauer angebrachten Führungseinrichtung angeordnet, sodass der mit dem Wagen oder Schlitten verbundene Arm in seiner zweiten Position ebenfalls im Wesentlichen horizontal, zumindest aber in einem Winkel von kleiner als 30°, insbesondere kleiner als 20°, gegenüber der Horizontalen in einem für eine Bedienperson gut erreichbare Höhe über dem Kai angeordnet sein kann.

In seiner ersten Position kann der Arm aus seiner zweiten Position so aufgeschwenkt sein, dass das Steckerteil höher angeordnet ist als in der zweiten Position des Arms. Der Arm kann in seiner ersten Position in einem Winkel größer als 60°, insbesondere größer als 70°, gegenüber der Horizontalen angeordnet sein. In dieser Position nimmt der Wagen oder Schlitten zusammen mit dem Arm einen relativ kleinen sich horizontal und senkrecht zum Verfahrweg des Wagens oder Schlittens erstreckenden Raum ein. Auf der ortsfesten Basisfläche, z.B. einer Kaianlage, nimmt daher der Wagen oder Schlitten zusammen mit dem Arm in seiner ersten Position einen relativ geringen, die Bewegungsfreiheit dort befindlicher Personen und Fahrzeuge kaum einschränkenden Raum ein.

In einer bevorzugten Ausführung der Erfindung kann das Abdeckteil als eine Klappe ausgebildet sein, die am Arm um eine zur Verschwenkachse des Arms parallele Achse verschwenkbar ist, wobei die Achse mit einem Abstand vom Steckerteil in Richtung auf das freie Ende des Arms hin angeordnet ist.

In einer bevorzugt etwa vertikalen Stellung des Arms in seiner ersten Position kann sich die Klappe ebenfalls in vertikaler Schwenkposition befinden. Die vom Verbraucher weg weisende Wand und die in Richtung des Verfahrweges des Wagens oder Schlittens weisenden Seitenwände der Klappe können dann ebenfalls vertikal verlaufen.

Durch Kopplung der Schwenkbewegung der Klappe mit der Schwenkbewegung des Arms kann die Klappe beim Verschwenken des Arms aus seiner ersten Position in die zweite Position vom Arm weg geschwenkt werden, sodass das Steckerteil in der zweiten Position des Arms freigelegt ist. Die Klappe kann sich in der zweiten Position des Arms ebenfalls in vertikaler Stellung befinden.

Der Arm und die Klappe können so ausgebildet sein, dass sich die Klappe in der zweiten Position des Arms, in der sie vom Arm weg geschwenkt ist, auf einer ortsfesten Basisfläche, z.B. der Kaianlage eines Schiffsanlegeplatzes, abstützt.

Die Klappe kann eine vorzugsweise im Wesentlichen rechteckige vom Verbraucher weg weisende Wand und daran seitlich anschließende, in Richtung des Verfahrweges des Wagens oder Schlittens weisende, vorzugsweise im Wesentlichen rechteckige Seitenwände aufweisen. Die Klappe kann dann einen gefährdeten Raumbereich vom Verbraucher weg und seitlich vor den Auswirkungen einer Lichtbogenexplosion im Verbindungsbereich zwischen dem Steckerteil und der verbraucherseitigen Energieversorgungsleitung schützen. Bei Verwendung der erfindungsgemäßen Einrichtung zur Energieversorgung für ein an einer Kaianlage eines Hafens liegende Schiff besteht bei dieser Ausbildung der Klappe ein Schutz senkrecht zum Verfahrweg des Wagens oder Schlittens zur Kaianlage hin und in den beiden Richtungen des Verfahrweges.

Die vom Verbraucher weg weisende Wand und gegebenenfalls die Seitenwände der Klappe können in der zweiten Position des Arms im Wesentlichen senkrecht zum Arm angeordnet sein.

Die Klappe kann durch einen Hebelmechanismus mit dem Arm gekoppelt sein, insbesondere derart, dass sie durch die Schwenkbewegung des Arms zwischen dessen erster und zweiter Position simultan mitverschwenkt wird.

Dazu kann der Hebelmechanismus eine Gelenkstange aufweisen, die in einem ihrer Endbereiche verschwenkbar an der Klappe und in ihrem anderen Endbereich verschwenkbar an einem ortsfest mit dem Wagen oder Schlitten verbundenen, vom Verbraucher weg weisenden Hebelarm angeordnet ist.

Am oder im Arm kann ein sich längs des Arms erstreckender Kabelkanal angeordnet sein, in dem die mindestens eine Energieversorgungsleitung im Bereich des Arms angeordnet ist.

Der Arm kann plattenförmig ausgebildet sein, wobei der Kabelkanal auf dem Arm angeordnet ist.

Insbesondere kann jeweils ein Kabelkanal im Bereich einer der beiden Längsseiten des Arms angeordnet sein.

Der Kabelkanal kann zumindest im Bereich der Schwenkverbindung des Arms mit dem Wagen oder Schlitten in Verschwenkrichtung biegeflexibel ausgebildet sein.

Am Arm, insbesondere im Bereich des freien Endes des Arms, kann ein Gehäuse angeordnet sein, in das die versorgerseitige Energieversorgungsleitung hineingeführt und zu einem an dem Gehäuse, z.B. in Richtung zum Verbraucher hin, vorstehenden Steckerteil geführt ist. Der Kabelkanal kann an dem Gehäuse enden.

Das Abdeckteil kann in der ersten Position des Arms mit dem Gehäuse an der vom Verbraucher weg gerichteten Seite, den in Richtung des Verfahrweges des Wagens oder Schlittens weisenden Seiten und der vom Wagen oder Schlitten weg weisenden Seite mit dem Gehäuse abschließen. Somit kann das Abdeckteil mit dem Gehäuse in der ersten Position des Arms eine weitgehend geschlossene Abdeckung des Steckerteils in der vom Verbraucher weg weisenden Richtung sowie in seitlicher Richtung des Verfahrweges des Wagens oder Schlittens und in der vom Wagen oder Schlitten weg weisenden Richtung des Arms bilden. Durch eine Lichtbogenzündung entstehende heiße Gase können somit in einen ungefährdeten Raum abgeleitet werden.

Das als Klappe ausgebildete Abdeckteil kann am Gehäuse verschwenkbar gelagert sein.

Die versorgerseitige Energieversorgungsleitung kann in einem Bereich zwischen dem ortsfesten Versorger und dem Wagen oder Schlitten in mindestens einer Energieführungskette verlegt sein, die einen ortsfest zum Versorger angeordneten ersten Anschluss und einen am Wagen oder Schlitten angeordneten zweiten Anschluss aufweist, von dem aus die Energieversorgungsleitung über mindestens einen Kabelkanal zum verschwenkbaren Arm hin geführt ist.

Die Energieführungskette kann ein mit dem ersten Anschluss verbundenes erstes Trum und ein mit dem zweiten Anschluss verbundenes zweites Trum aufweisen, die über einen Umlenkbereich miteinander verbunden sind. Die beiden Trume können übereinander angeordnet sein, wobei das untere Trum bevorzugt mit dem ersten Anschluss und das obere Trum bevorzugt mit dem zweiten Anschluss verbunden ist.

Die Energieführungskette kann in einer insbesondere rinnenförmigen Führungseinrichtung angeordnet sein. Die Führungseinrichtung mit der Energieführungskette kann bei Verwendung der erfindungsgemäßen Einrichtung für ein an einer Kaianlage eines Hafens liegendes Schiff an der zum Schiff weisenden Seite der Kaimauer angeordnet sein.

Alternativ kann die Führungseinrichtung mit der Energieführungskette auch in einem in einer ortsfesten Basis, relativ zu der der Wagen oder Schlitten verfahrbar ist, z.B. einer Kaianlage eines Hafens, vorgesehenen Schacht angeordnet sein. Die Führungseinrichtung kann auch auf der ortsfesten Basis, z.B. einer Kaianlage eines Hafens, angeordnet sein.

Ein Ausführungsbeispiel der vorliegenden Erfindung wird im Folgenden anhand der Zeichnung näher beschrieben. In der Zeichnung zeigen:
- Fig. 1:: eine stirnseitige Draufsicht auf eine Einrichtung zur Versorgung eines Verbrauchers, wobei sich der mit dem Wagen oder Schlitten verbundene Arm mit dem Steckerteil in seiner zweiten Position befindet, mit gestrichelt gezeichneter erster Position und einer Zwischenposition,
- Fig. 2:: eine perspektivische Draufsicht auf die Einrichtung zur Versorgung eines Verbrauchers gemäß Fig. 1, wobei sich der mit dem Wagen oder Schlitten verbundene Arm in seiner zweiten Position befindet, und
- Fig. 3:: eine perspektivische Draufsicht auf die Einrichtung zur Versorgung eines Verbrauchers gemäß Fig. 1, wobei sich der mit dem Wagen oder Schlitten verbundene Arm in seiner ersten Position befindet.

Wie aus der Zeichnung hervorgeht, umfasst die Einrichtung 1 zur Versorgung eines (in der Zeichnung nicht dargestellten) Verbrauchers, dessen Position zunächst nicht genau bestimmbar, aber später im Wesentlichen stationär festlegbar ist, einen verfahrbaren Wagen oder Schlitten 2, der mit einem verschwenkbaren Arm 3 verbunden ist. Der Arm weist mindestens ein Steckverbinderteil, kurz: Steckerteil 4 zur Verbindung mit einer Energieversorgungsleitung 5 des Verbrauchers auf, wobei das Steckerteil 4 über eine Energieversorgungsleitung 6 mit dem (in der Zeichnung nicht dargestellten) ortsfesten Versorger verbunden ist.

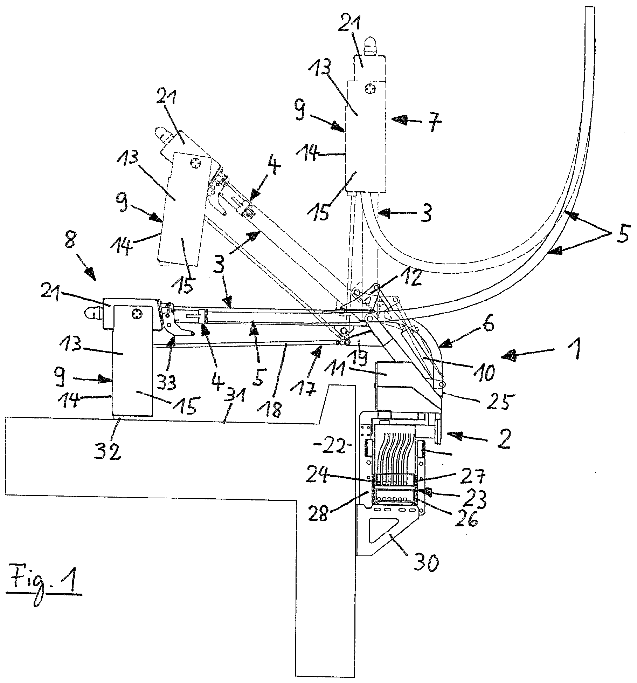

Wie insbesondere aus Fig. 1 hervorgeht, ist der mit dem Wagen oder Schlitten 2 verbundene Arm 3 zwischen einer ersten Position 7 und einer zweiten Position 8 verschwenkbar. Am Arm 3 ist im dargestellten Beispiel im Bereich seines freien Endes ein mit der Schwenkbewegung des Arms 3 verschwenkbares Abdeckteil 9 angeordnet, dessen Schwenkbewegung mit der Schwenkbewegung des Arms 3 gekoppelt ist, und zwar derart, dass das Abdeckteil 9 in der ersten Position 7 des Arms 3 das Steckerteil 4 zumindest teilweise abdeckt und in der zweiten Position 8 des Arms 3 das Steckerteil 4 zur Verbindung mit der verbraucherseitigen Energieversorgungsleitung 5 freigelegt.

Der Wagen oder Schlitten 2 ist senkrecht zur Zeichnungsebene der Fig. 1 in beiden Richtungen verfahrbar. Die Achse, um die der mit dem Wagen oder Schlitten 2 verbundene Arm 3 verschwenkbar ist, ist im dargestellten Beispiel parallel zum Verfahrweg des Wagens oder Schlittens 2 angeordnet. Wie ebenfalls aus der Zeichnung hervorgeht, ist der Arm 3 in seiner ersten Position 7 im Wesentlichen vertikal und in seiner zweiten Position 8 im Wesentlichen horizontal angeordnet.

Bei der in Fig. 1 dargestellten Zwischenposition des verschwenkbaren Arms 3 ist die verbraucherseitige erste Energieversorgungsleitung 5 der Übersichtlichkeit der Zeichnung halber nicht eingezeichnet.

Der Arm 3 ist in dem betrachteten Ausführungsbeispiel über einen Hydraulikantrieb 10 verschwenkbar, der an einer haubenförmigen Abdeckung 11 des Wagens oder Schlittens 2 und an einem auf dem Arm 3 an seinem dem freien Ende gegenüberliegenden Endbereich angeordneten gabelförmigen Steg 12 gelenkig angreift.

Das Abdeckteil 9 ist als eine Klappe 13 ausgebildet, die am Arm 3 um eine zur Verschwenkachse des Arms 3 parallele Achse verschwenkbar ist, wobei die Achse mit einem Abstand vom Steckerteil 4 in Richtung auf das freie Ende des Arms 3 hin angeordnet ist. Wie aus der Zeichnung hervorgeht, weist die Klappe 13 eine im Wesentlichen rechteckige, vom Verbraucher wegweisende Wand 14 und daran seitlich anschließende, in Richtung des Verfahrweges des Wagens oder Schlittens 2 weisende, im Wesentlichen rechteckige Seitenwände 15, 16 auf. Die Klappe kann somit einen gefährdeten Raumbereich, bei dem es sich gemäß Zeichnung um eine Kaianlage für ein daran anzulegendes Schiff (Verbraucher) handelt, vom Verbraucher weg und seitlich vor den Auswirkungen einer möglichen Lichtbogenexplosion im Verbindungsbereich zwischen dem Steckerteil 4 und der verbraucherseitigen Energieversorgungsleitung 5 schützen.

In der vertikalen Stellung des Arms 3 in seiner ersten Position 7 befindet sich die Klappe 13 ebenfalls in ihrer vertikalen Schwenkposition, wobei die vom Verbraucher wegweisende Wand 14 und die in Richtung des Verfahrweges des Wagens oder Schlittens 2 weisenden Seitenflächen 15, 16 der Klappe 13 ebenfalls vertikal verlaufen. Die Klappe 13 ist, wie insbesondere aus Fig. 1 hervorgeht, durch einen Hebelmechanismus 17 mit dem Arm 3 derart gekoppelt, dass sie durch die Schwenkbewegung des Arms 3 zwischen dessen erster Position 7 und zweiter Position 8 simultan mit verschwenkt wird. Der Hebelmechanismus 17 weist eine Gelenkstange 18 auf, die in einem ihrer Endbereiche verschwenkbar an der Klappe 13 und in ihrem anderen Endbereich verschwenkbar an einem ortsfest mit dem Wagen oder Schlitten 2 verbundenen, vom Verbraucher wegweisenden Hebelarm 19 angeordnet ist.

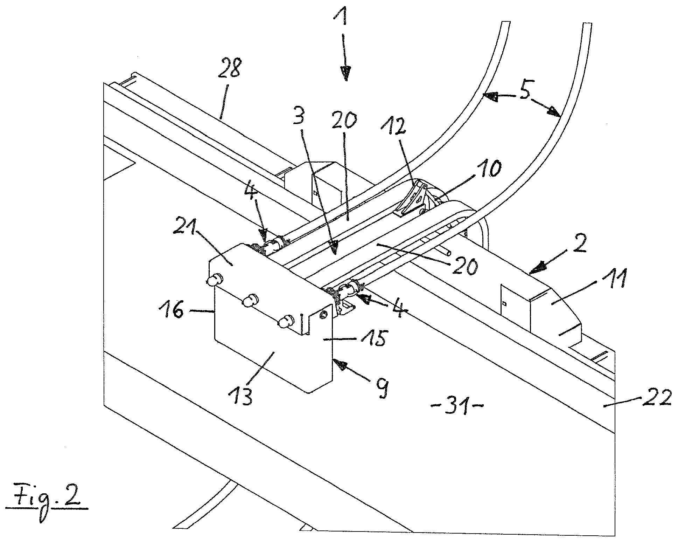

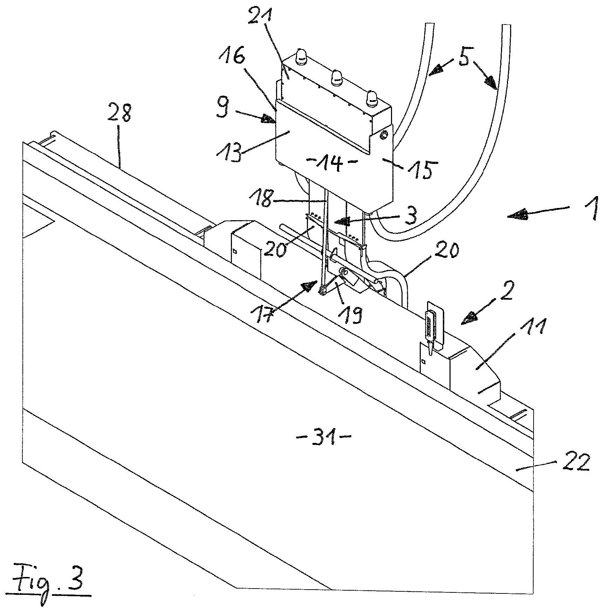

Wie insbesondere die Figuren 2 und 3 zeigen, ist der Arm 3 plattenförmig ausgebildet, wobei sich jeweils ein Kabelkanal 20 im Bereich einer der beiden Längsseiten des plattenförmigen Arms 3 befindet, in dem jeweils ein armseitiger Bereich der Energieversorgungsleitung 6 angeordnet ist.

Die beiden Kabelkanäle 20 sind, wie insbesondere aus den Figuren 2 und 3 hervorgeht, in Verschwenkrichtung des Arms 3 biegeflexibel ausgebildet.

Im Bereich des freien Endes des Arms 3 ist ein Gehäuse 21 angeordnet, in das die Kabelkanäle 20 enden und der darin angeordnete Bereich der Energieversorgungsleitung 6 zu dem an dem Gehäuse 21 in Richtung zum Verbraucher hin vorstehenden Steckerteil 4 geführt sind.

Die Klappe 13 ist am Gehäuse 21 verschwenkbar gelagert. Wie in Fig. 3 gezeigt ist, schließt die Klappe 13 in der ersten Position 7 des Arms 3 mit dem Gehäuse 21 an der vom Verbraucher weg gerichteten Seite, den in Richtung des Verfahrweges des Wagens oder Schlittens 2 weisenden Seiten und der vom Wagen oder Schlitten 2 wegweisenden Seite mit dem Gehäuse 21 ab, ohne dass nennenswerte Zwischenräume zwischen der Klappe 13 und dem Gehäuse 21 an diesen Seiten entstehen, durch die bei einer möglichen Lichtbogenzündung entstehende heiße Gase in den genannten Richtungen austreten können. Derartige durch eine Lichtbogenzündung entstehende heiße Gase können somit in einen ungefährdeten Raum, im vorliegenden Beispiel zwischen der Kaimauer 22 und dem (in der Zeichnung nicht dargestellten) Schiff, abgeleitet werden. Zu bemerken ist, dass in diesem Beispiel das Schiff über (in der Zeichnung nicht dargestellte) Folder von der Kaimauer 22 so weit beabstandet ist, dass der Wagen oder Schlitten 2 und dessen Führungseinrichtung durch das Schiff nicht berührt werden.

Die versorgerseitige Energieversorgungsleitung 6 ist im Bereich zwischen dem ortsfesten Versorger und dem Wagen oder Schlitten 2 in einer Energieführungskette 23 verlegt, die einen ortsfest zum Versorger angeordneten (in der Zeichnung nicht dargestellten) ersten Anschluss und einen am Wagen oder Schlitten 2 angeordneten zweiten Anschluss 24 aufweist, von dem aus die zweite Energieversorgungsleitung 6 über mindestens einen Kabelkanal 25 zum verschwenkbaren Arm 3 hin geführt ist. Die Energieführungskette 23 weist ein mit dem ersten Anschluss verbundenes unteres Trum 26 und ein mit dem zweiten Anschluss 24 verbundenes oberes Trum 27 auf, die über einen Umlenkbereich miteinander verbunden sind. Die Energieführungskette 23 ist in einer Führungsrinne 28 angeordnet, die ebenfalls den mit dem zweiten Anschluss 24 verbundenen Wagen oder Schlitten 2 längs seines Verfahrweges auf Rollen 29 führt. Die Führungsrinne ist auf Konsolen 30 an der Kaimauer 22 ortsfest angeordnet.

Aufgrund der seitlich an der Kaimauer 22 befestigten Führungsrinne 28 mit dem darauf angeordneten Wagen oder Schlitten 2 ist die Schwenkachse des Arms 3 relativ niedrig in Bezug auf die Basisfläche 31 des Kais angeordnet, sodass der Arm 3 in seiner zweiten, im Wesentlichen horizontalen Position mit dem Steckerteil 4 für eine auf dem Kai befindliche Bedienperson leicht zugänglich ist. In der zweiten Position 8 des Arms 3 stützt sich die Klappe 13 mit einem oder mehreren Auflageelementen 32 auf der Basisfläche 31 des Kais ab. Das Steckerteil 4 kann von der Bedienperson mit der verbraucherseitigen ersten Energieversorgungsleitung 5 verbunden und die Verbindung durch einen Verriegelungsmechanismus 33 verriegelt werden. Ebenfalls kann nach Beendigung der Energieversorgung des Verbrauchers in der zweiten Position 8 des Arms 3 durch Lösen der Verriegelung die verbraucherseitige erste Energieversorgungsleitung 5 vom Steckerteil 4 gelöst werden.

Weiterhin ist am Arm 3 und der Klappe 13 eine (in der Zeichnung nicht dargestellte) Verriegelungseinrichtung vorgesehen, mit der die Klappe 13 in der ersten Position 7 des Arms 3 mit dem Arm 3 verriegelt werden kann, sodass im Falle einer Lichtbogenexplosion zwischen dem Steckerteil 4 und der mit dem Steckerteil 4 verbundenen verbraucherseitigen ersten Energieversorgungsleitung 5 die Klappe 13 durch den Explosionsdruck nicht aufgeschwenkt werden kann.

### Bezugszeichenliste

- 1: Einrichtung
- 2: Schlitten
- 3: Arm
- 4: Steckverbinderteil (kurz: Steckerteil)
- 5: erste Energieversorgungsleitung
- 6: zweite Energieversorgungsleitung
- 7: erste Position
- 8: zweite Position
- 9: Abdeckteil
- 10: Hydraulikantrieb
- 11: Abdeckung
- 12: Steg
- 13: Klappe
- 14: Wand
- 15: Seitenfläche
- 16: Seitenfläche
- 17: Hebelmechanismus
- 18: Gelenkstange
- 19: Hebelarm
- 20: Kabelkanal
- 21: Gehäuse
- 22: Kaimauer
- 23: Energieführungskette
- 24: zweiter Anschluss
- 25: Kabelkanal
- 26: unteres Trum
- 27: oberes Trum
- 28: Führungsrinne
- 29: Rolle
- 30: Konsole
- 31: Basisfläche
- 32: Auflageelement
- 33: Verriegelungsmechanismus

## Patentansprüche

1. Einrichtung (1) zur Versorgung eines Schiffes dessen Position zunächst nicht genau bestimmbar, aber später im Wesentlichen stationär an einem Hafenkai festlegbar ist, mit elektrischer Energie von einem ortsfesten Versorger, mit einem verfahrbaren Wagen oder Schlitten (2), der einen zwischen einer ersten Position (7) und einer zweiten Position (8) beweglichen Arm (3) umfasst, der mindestens ein Steckverbinderteil (4) zur Verbindung mit einer ersten Energieversorgungsleitung (5) des Schiffes aufweist, wobei das Steckverbinderteil (4) über eine zweite Energieversorgungsleitung (6) mit dem Versorger verbindbar ist, **dadurch gekennzeichnet, dass** der Arm (3) zwischen der ersten Position (7) und der zweiten Position (8) verschwenkbar am verfahrbaren Wagen oder Schlitten (2) angeordnet ist, und dass der verfahrbare Wagen oder Schlitten (2) an einer am Hafenkai anbringbaren Führungseinrichtung geführt ist.

2. Einrichtung (1) zur Versorgung eines Schiffes, dessen Position zunächst nicht genau bestimmbar, aber später im Wesentlichen stationär an einem Hafenkai festlegbar ist, mit elektrischer Energie von einem ortsfesten Versorger, mit einem verfahrbaren Wagen oder Schlitten (2), der mit einem zwischen einer ersten Position (7) und einer zweiten Position (8) beweglichen Arm (3) verbunden ist, der mindestens ein Steckverbinderteil (4) zur Verbindung mit einer ersten Energieversorgungsleitung (5) des Schiffes aufweist, wobei das Steckverbinderteil (4) über eine zweite Energieversorgungsleitung (6) mit dem Versorger verbindbar ist, **dadurch gekennzeichnet, dass** am Arm (3) im Bereich des freien Endes des Arms (3) ein Gehäuse (21) angeordnet ist, in das die versorgerseitige zweite Energieversorgungsleitung (6) hineingeführt und zu einem am Gehäuse (21) vorgesehenen Steckverbinderteil (4) geführt ist,
dass in der ersten Position des Arms, das Gehäuse mit dem Steckverbinderteil höher angeordnet ist, als in der zweiten Position des Arms, und
dass in der zweiten Position des Arms, das Gehäuse mit dem Steckverbinderteil so angeordnet ist, dass das Steckverbinderteil (4) für eine sich auf dem Hafenkai (31) befindliche Bedienperson leicht zugänglich ist.

3. Einrichtung (1) nach Anspruch 2, **dadurchgekennzeichnet**, dass der Arm (3) zwischen der ersten Position (7) und der zweiten Position (8) verschwenkbar ist; und/oder
dass das Steckverbinderteil (4) als an dem Gehäuse (21) vorstehendes Steckverbinderteil (4) ausgeführt ist.

4. Einrichtung (1) nach Anspruch 1, **dadurchgekennzeichnet**, dass am Arm (3) ein Gehäuse (21) angeordnet ist, in das die versorgerseitige zweite Energieversorgungsleitung (6) hineingeführt und zu dem Steckverbinderteil (4) geführt ist, welches am Gehäuse (21) vorgesehen ist und vorzugsweise als an dem Gehäuse (21) vorstehendes Steckverbinderteil (4) ausgeführt ist.

5. Einrichtung nach Anspruch 4, **dadurch gekennzeichnet, dass** ein Abdeckteil (9), welches als Klappe (13) ausgebildet ist, am Gehäuse (21) verschwenkbar gelagert ist, und dass das Abdeckteil in der ersten Position (7) des Arms (3) das Steckverbinderteil (4) zumindest teilweise abdeckt und in der zweiten Position (8) des Arms (3) aufklappbar ist um das Steckverbinderteil (4) zur Verbindung mit der schiffsseitigen ersten Energieversorgungsleitung (5) freizulegen.

6. Einrichtung (1) nach einem der Ansprüche 1, 4 oder 5, **dadurch gekennzeichnet, dass** der Arm (3) in seiner zweiten Position (8) so angeordnet ist, dass das Steckverbinderteil (4) für eine sich auf einer ortsfesten Basisfläche (31), relativ zu der der Wagen oder Schlitten (2) verfahrbar ist, befindliche Bedienperson leicht zugänglich ist.

7. Einrichtung (1) nach Anspruch 2 oder 3, **dadurch gekennzeichnet, dass** ein Abdeckteil (9) am Arm (3) angeordnet ist, das in der ersten Position, (7) des Arms (3) das Steckverbinderteil (4) zumindest teilweise abdeckt und in der zweiten Position (8) des Arms (3) das Steckverbinderteil (4) zur Verbindung mit der schiffsseitigen ersten Energieversorgungsleitung (5) freilegt, vorzugsweise wobei das Abdeckteil (9) als Klappe (13) ausgebildet ist und am Gehäuse (21) verschwenkbar gelagert ist.

8. Einrichtung (1) nach Anspruch 5 oder 7, **dadurch gekennzeichnet, dass** das Abdeckteil (9) eine in eine erste Richtung weisende Wand (14) und an die Wand (14) seitlich anschließende, in eine zweite Richtung quer zur ersten Richtung weisende Seitenwände (15, 16) aufweist, wobei die Wand (14) und die Seitenwände (15, 16) das Steckverbinderteil (4) in der ersten Position (7) des Arms (3) abdecken.

9. Einrichtung (1) nach Anspruch 5, 7 oder 8, **dadurch gekennzeichnet, dass** das Abdeckteil (9) in der ersten Position (7) des Arms (3) verriegelbar und entriegelbar ist.

10. Einrichtung (1) nach einem der Ansprüche 1 bis 9, **dadurch gekennzeichnet, dass** die Achse, um die der Arm (3) verschwenkbar ist, horizontal und parallel zum Verfahrweg des Wagens oder Schlittens (2) verläuft.

11. Einrichtung (1) nach einem der Ansprüche 1 bis 10, **dadurch gekennzeichnet, dass** am Arm (3) ein sich längs des Arms (3) erstreckender Kabelkanal (20) angeordnet ist, in dem die mindestens eine versorgerseitige zweite Energieversorgungsleitung (6) im Bereich des Arms (3) angeordnet ist, wobei der Kabelkanal (20) zumindest im Bereich der Schwenkverbindung des Arms (3) mit dem Wagen oder Schlitten (2) in Verschwenkrichtung biegeflexibel ausgebildet ist.

12. Einrichtung (1) nach einem der Ansprüche 1 bis 11, **dadurch gekennzeichnet, dass** die zumindest eine versorgerseitige zweite Energieversorgungsleitung (6) in einem Bereich zwischen dem ortsfesten Versorger und dem Wagen oder Schlitten (2) in mindestens einer Energieführungskette (23) verlegt ist, die einen ortsfest zum Versorger angeordneten ersten Anschluss und einen am Wagen oder Schlitten (2) angeordneten zweiten Anschluss (24) aufweist.

13. Einrichtung nach Anspruch 12, **dadurch gekennzeichnet, dass** die Energieführungskette (23) in einer Führungsrinne (28) angeordnet ist, die als Führungseinrichtung den Wagen oder Schlitten (2) führt.

14. Einrichtung nach einem der Ansprüche 1, oder 4 bis 6, **dadurch gekennzeichnet, dass** die Führungseinrichtung, an der der Wagen oder Schlitten (2) geführt ist, schiffsseitig an der Kaimauer angebracht ist.

15. Einrichtung (1) nach Anspruch 2, 3 oder 7, **dadurch gekennzeichnet, dass**
- der Arm (3) in seiner zweiten Position (8) in einem Winkel von kleiner als 30°, insbesondere kleiner als 20°, gegenüber der Horizontalen angeordnet ist; und/oder
- dass der Arm (3) in seiner ersten Position (7) in einem Winkel von größer als 60°, insbesondere größer als 70°, gegenüber der Horizontalen angeordnet ist.

16. Einrichtung (1) nach einem der Ansprüche 5 oder 7 bis 9, **dadurch gekennzeichnet, dass** das Abdeckteil (9) als eine Klappe (13) ausgebildet ist, die am Arm (3) um eine zur Verschwenkachse des Arms parallele Achse verschwenkbar ist, und/oder
dass die Klappe (13) durch einen Hebelmechanismus (17) mit dem Arm (3) gekoppelt ist.

17. Einrichtung (1) nach Anspruch 16, **dadurch gekennzeichnet, dass**
- in einer vertikalen Stellung des Arms (3) in seiner ersten Position (7) die Klappe (13) sich ebenfalls in vertikaler Schwenkposition befindet; und/oder dass
- die Klappe (13) in der zweiten Position (8) des Arms (3) sich in vertikaler Schwenkposition befindet.

18. Einrichtung (1) nach Anspruch 7, 16 oder 17, **dadurch gekennzeichnet, dass** das Abdeckteil (9) in der ersten Position (7) des Arms (3) mit dem Gehäuse (21) an zumindest drei Seiten, umfassend eine vom Schiff weg gerichteten Seite, eine in Richtung des Verfahrweges des Wagens oder Schlittens (2) weisende Seite und eine vom Wagen oder Schlitten (2) weg weisende Seite, abschließt.
